**Europäisches Patentamt**

(19) **European Patent Office**

**Office européen des brevets**

(11) Veröffentlichungsnummer: **0 183 074**
**B1**

(12) # EUROPÄISCHE PATENTSCHRIFT

(45) Veröffentlichungstag der Patentschrift:
**13.09.89**

(51) Int. Cl.⁴: **B 65 G 47/10,** B 65 G 1/08

(21) Anmeldenummer: **85113794.3**

(22) Anmeldetag: **30.10.85**

(54) **Rechnergesteuerte Kommissionieranlage.**

(30) Priorität: **02.11.84 DE 8432067 U**

(43) Veröffentlichungstag der Anmeldung:
**04.06.86 Patentblatt 86/23**

(45) Bekanntmachung des Hinweises auf die Patenterteilung:
**13.09.89 Patentblatt 89/37**

(84) Benannte Vertragsstaaten:
**AT BE CH DE FR GB IT LI LU NL SE**

(56) Entgegenhaltungen:
**DE-A-2 226 769**
**DE-A-2 736 197**
**FR-A-2 185 557**
**GB-A-2 118 156**
**US-A-2 808 946**
**US-A-2 983 392**

(73) Patentinhaber: **Christ, Ferdinand, Lindenstrasse 9,
D-6761 Weitersweiler (DE)**

(72) Erfinder: **Christ, Ferdinand, Lindenstrasse 9, D-6761
Weitersweiler (DE)**

(74) Vertreter: **Gudel, Diether, Dr., Patentanwälte Dr.
V. Schmied- Kowarzik Dipl.- Ing. G. Dannenberg
Dr. P. Weinhold Dr. D. Gudel Dipl.- Ing. S.
Schubert Dr. P. Barz Grosse Eschenheimer
Strasse 39, D-6000 Frankfurt am Main 1 (DE)**

## Beschreibung

Die Erfindung betrifft eine rechnergesteuerte Kommissionieranlage mit einem mit gleichmäßiger Geschwindigkeit angetriebenen Förderband, an dessen Seiten nebeneinander Reihen von schachtartigen, länglichen Vorratsbehältern für zu kommissionierende Artikel angeordnet sind, an deren unteren Enden jeweils eine vom Rechner gesteuerte Abgabevorrichtung vorgesehen ist, die die von ihrem Vorratsbehälter gespeicherten Artikel auf das Förderband abgeben kann, das die in den Vorratsbehältern gespeicherten Artikel nach Aufträgen sortiert weiter transportiert.

Eine derartige Kommissionieranlage ist bekannt. Bei ihr werden auf dem Förderband zu kommissionierende Kisten vorbeitransportiert, die auftragsgebunden mit denjenigen Artikeln befüllt werden, die in den Vorratsbehältern dieser Anlage gespeichert sind. Hierzu gibt der Rechner immer dann, wenn die betreffende Kiste an einem der Vorratsbehälter vorbei geht, einen Impuls an die Abgabevorrichtung des betreffenden Vorratsbehälters, wodurch dieser dann in die Kiste die gewünschte Anzahl der Artikel abgibt.

Es ist eine ähnliche, ebenfalls rechnergesteuerte Kommissionieranlage bekannt, bei der auf dem Förderband keine Kisten transportiert werden, sondern es werden auftragsgebundene Haufen der Artikel auf dem Förderband gebildet, die dann an einer nachfolgenden Übergabestation in die auftragsgebundenen Kisten übergeben werden. Die vorliegende Erfindung läßt sich bei beiden Systemen anwenden, nämlich mit oder ohne Kisten auf dem Förderband. Bevorzugt wird dasjenige System, bei dem die Artikel direkt auf dem Förderband auftragsgebunden angehäuft werden, wie dies weiter unten noch erläutert wird.

Bei der geschilderten bekannten Kommissionieranlage sind die Vorratsbehälter im wesentlichen lotrecht jeweils nebeneinander in Reihen angeordnet. Sie haben notwendigerweise eine Höhe derart, daß sie von oben noch von Hand befüllt werden können. Die Speicherkapazität für die Artikel in diesen Vorratsbehältern ist daher fühlbar begrenzt.

Die US-A-2 983 392 beschreibt eine ähnliche Kommissionieranlage, die allerdings nicht von einem Rechner gesteuert ist. Dort sind die Vorratsbehälter gegenüber der Horizontalen geneigt und zu mehreren übereinander angeordnet. Dadurch ergibt sich eine fühlbar erhöhte Speicherkapazität für die betreffenden Artikel, ohne daß der hierfür in Anspruch genommene Platz wesentlich erhöht wird.

Der Erfindung liegt, ausgehend von einer rechnergesteuerten Kommissionieranlage mit den Merkmalen des Oberbegriffs von Patentanspruch 1 die Aufgabe zugrunde, diese so auszugestalten, daß sie sich durch eine fühlbar erhöhte Speicherkapazität für die Artikel auszeichnet, ohne daß der hierfür in Anspruch genommene Platz wesentlich erhöht wird. Es soll insgesamt die Kommissionierkapazität der Anlage, verglichen mit dem geschilderten Stand der Technik, fühlbar erhöht werden, wobei unter der Kommissionierkapapzität die Anzahl der pro Zeiteinheit kommissionierten Artikel zu verstehen ist.

Zur Lösung dieser Aufgabe ist die Erfindung dadurch gekennzeichnet, daß die Vorratsbehälter gegenüber der Horizontalen geneigt und zu mehreren übereinander angeordnet sind, daß am Abgabeende des Förderbandes eine Übergabestation für die auf dem Förderband kommissionierten Artikel vorgesehen ist, an der ein weiteres, angetriebenes Förderband vorbeigeführt ist und daß an dem weiteren Förderband vor der Übergabestation in einem bestimmten Abstand von dieser ein Lesegerät vorgesehen ist, das ein Signal an den Rechner abgibt, sobald an ihm ein kistenförmiger Behälter für jeweils eine der Kommissionen vorbeitransportiert wird.

Man benötigt somit nur verhältnismäßig wenig zusätzlichen Raum, und zwar vorzugsweise in Richtung quer zur Förderrichtung des Bandes. Dennoch läßt sich jetzt ein Vielfaches an zu kommissionierenden Artikeln in den Vorratsbehältern unterbringen. Die nachfolgende Beispielsbeschreibung erläutert, daß beispielsweise etwa die vierfache Menge an Artikeln gespeichert werden kann, wobei die Vorratsbehälter immer noch von Hand befüllt werden können.

Die zitierten Merkmale der Übergabestation in ihrem Bezug zu dem weiteren, angetriebenen Förderband ergeben eine Optimierung des Kommissioniervorganges, weil dadurch dafür gesorgt wird, daß immer dann eine der auf dem ersten Förderband gebildeten Kommissionen in einen kistenförmigen Behälter auf dem zweiten Förderband entleert wird, wenn ein solcher kistenförmiger Behälter an der Übergabestation vorbeigeht. Durch diese Maßnahmen werden die Transportgeschwindigkeiten der beiden Förderbänder gewissermaßen derart aufeinander abgestimmt, daß ohne Wartezeiten an der Übergabestation stets dann eine Kiste sich befindet, wenn dort das für diese Kiste bestimmte Häufchen der kommissionierten Artikel anlangt. Man muß daher die Behälter auf dem zweiten Förderband nur kurzfristig an der Übergabestation anhalten, bis nämlich die Artikel dieses Häufchens an diese Kiste übergeben sind. Grundsätzlich ist daher das zweite Förderband dauernd mit gleichförmiger Geschwindigkeit angetrieben, weil das kurze Anhalten der Kisten an der Übergabestation durch andere Mittel erfolgen kann, beispielsweise durch einen Halteschieber usw., der kurzfristig vor die betreffende Kiste geführt wird, bis die Artikel in die Kiste übergeben sind. Beide Förderbänder müssen nicht notwendigerweise mit derselben Geschwindigkeit transportieren; es kommt nur auf die Transportzeiten vom Lesegerät zur Übergabestation bzw. vom Anfang der Kommissionieranlage zur Übergabestation an.

Die Neigung der Vorratsbehälter zur Horizontalen soll so sein, daß die Artikel problemlos mit Hilfe der Schwerkraft nach unten nachrutschen können und dort von der Abgabevorrichtung abgegeben werden. Eine Neigung zwischen 30° und 60° wird daher bevorzugt; vorzugsweise liegt die Neigung im Bereich von 45°.

Ab einer gewissen Höhe der Reihen der Vorratsbehälter empfiehlt es sich, zwischen den Reihen der Vorratsbehälter und etwa mittig über dem Förderband einen Prallvorhang anzuordnen. Dieser verhindert, daß die von den geneigt angeordneten Vorratsbehältern abgegebenen Artikel bei der Abgabe gewissermaßen über das Band hinaus schießen bzw. nicht genau an die für sie vorbestimmte Stelle auf dem Förderband fallen. Ein solcher Prallvorhang empfiehlt sich, wenn mehr als vier Vorratsbehälter übereinander angeordnet sind.

Bei der bekannten Anlage war es stets problematisch, der Bedienungsperson der Anlage mitzuteilen, wann die Vorratsbehälter nachgefüllt werden mußten. Hier schafft die Erfindung dadurch Abhilfe, daß an jeder Reihe der Vorratsbehälter eine mit dem Rechner sowie mit einer der betreffenden Reihe räumlich zugeordneten Anzeige verbundene Zählvorrichtung für die Anzahl der in der Reihe befindlichen Artikel vorgesehen ist. Hierbei wird davon ausgegangen, daß in jeder lotrechten Reihe dieselben Artikel vorgesehen sind. Wenn dies nicht der Fall sein sollte, wobei dann auch unterschiedliche Artikel in einer lotrechten Reihe gespeichert sind, müssen natürlich für jeden dieser Artikel entsprechende Zählvorrichtungen vorgesehen sein, gegebenenfalls für jeden der Vorratsbehälter.

Für die Zählvorrichtung bietet es sich an, wenn am Eingang und am Ausgang jedes Vorratsbehälters eine Zähleinrichtung für die in den Vorratsbehältern eingegebenen Artikel bzw. für die vom Vorratsbehälter abgegebenen Artikel vorgesehen ist. Mit diesen Zähleinrichtungen zählt man also die jeweils zugegebenen bzw. abgegebenen Artikel und der Rechner kennt dann den jeweils aktuellen Bestand.

Die erwähnte Anzeige gibt ein Signal ab, wenn der in dem betreffenden Vorratsbehälter bzw. in der betreffenden lotrechten Reihe vorhandene Vorrat erfahrungsgemäß in Kürze aufgebraucht ist, so daß die Bedienungsperson ausreichend Zeit hat, den Artikel nachzufüllen, ehe dieser Artikel mit dem nächsten Auftrag wieder verlangt und abgegeben wird.

In Transportrichtung des zweiten Förderbandes kann vor und hinter der Übergabestation eine mit dem Rechner verbundene Waage vorgesehen sein, die durch einen Vergleich des Sollgewichts mit dem Istgewicht die in der Übergabestation an die Behälter übergebenen Artikel jeder Kommission kontrolliert.

Die Erfindung wird im folgenden anhand eines Ausführungsbeispieles näher erläutert, aus dem sich weitere wichtige Merkmale ergeben. Es zeigt:

Fig. 1 perspektivisch eine rechnergesteuerte Kommissionieranlage nach der Erfindung;

Fig. 2 eine Stirnansicht der Kommissionieranlage;

Fig. 3 perspektivisch vergrößert einen Ausschnitt aus dieser Kommissionieranlage, wobei zur Verdeutlichung einige der geneigten Schächte fortgelassen sind;

Fig. 4 eine Seitenansicht von Fig. 3.

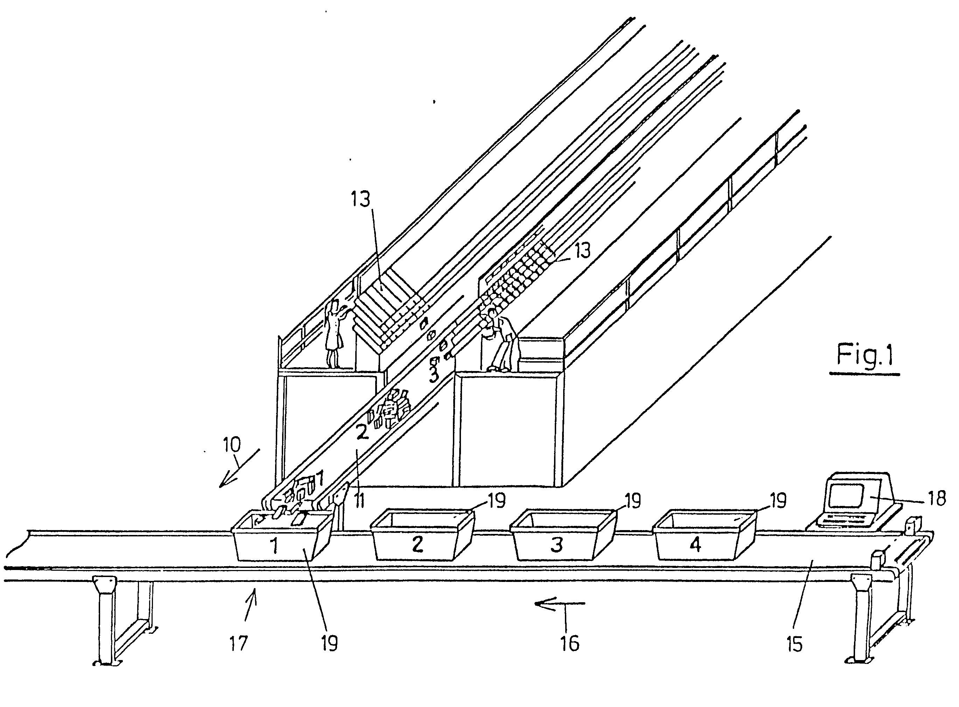

Zunächst sei anhand von Fig. 1 der grundsätzliche Aufbau und die grundsätzliche Arbeitsweise der neuartigen, rechnergesteuerten Kommissionieranlage erläutert.

Auf einem in Richtung des Pfeiles 10 angetriebenen, ersten Förderband 11 sollen Häufchen 1, 2, 3... von zu kommisionierenden Artikeln 12 gebildet werden. Das bedeutet, daß die jedes dieser Häufchen bildenden Artikel zu einer Kommission gehören.

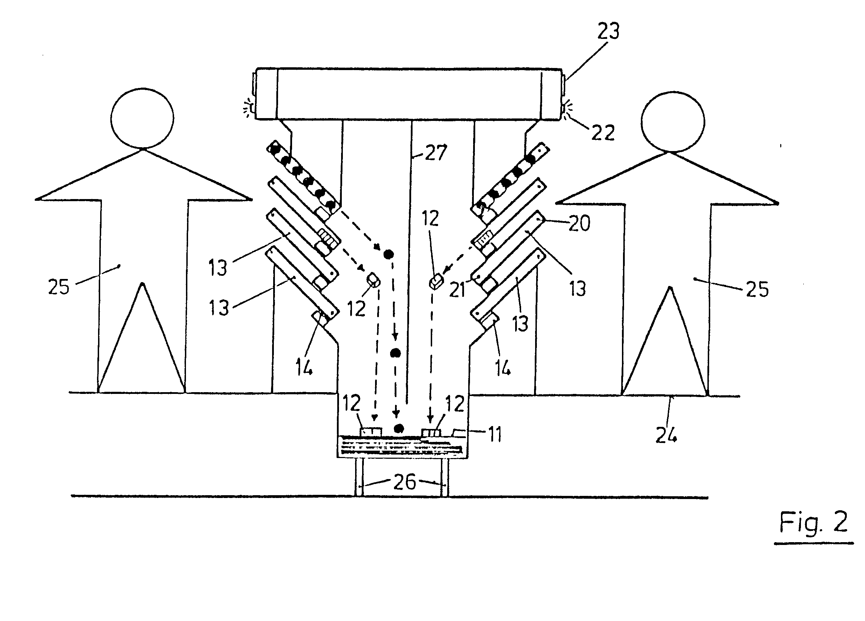

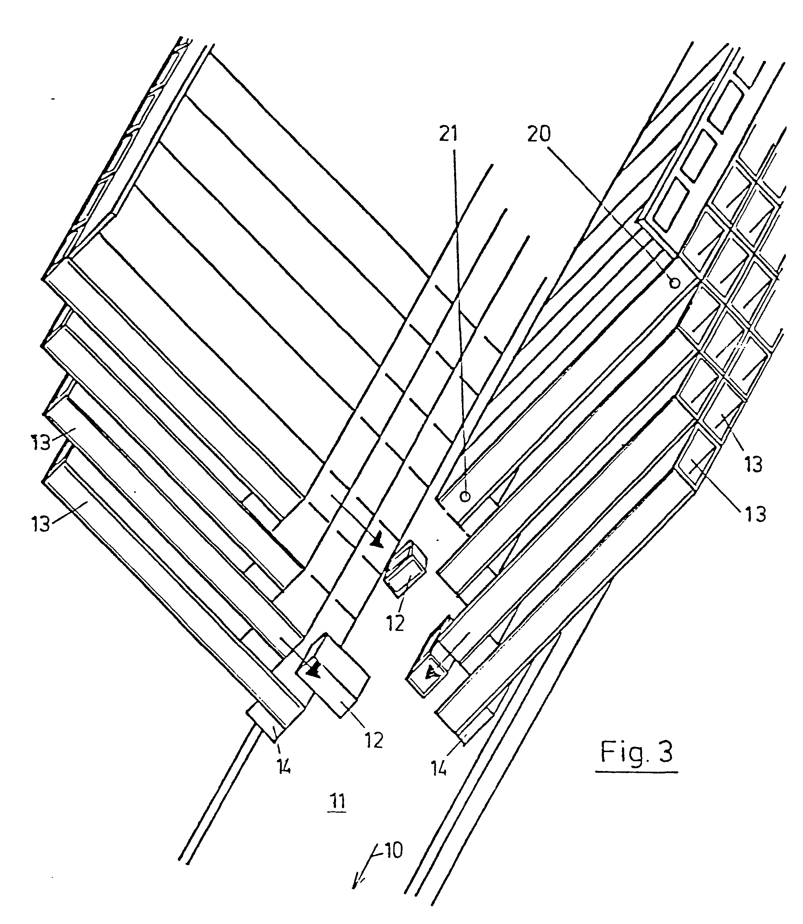

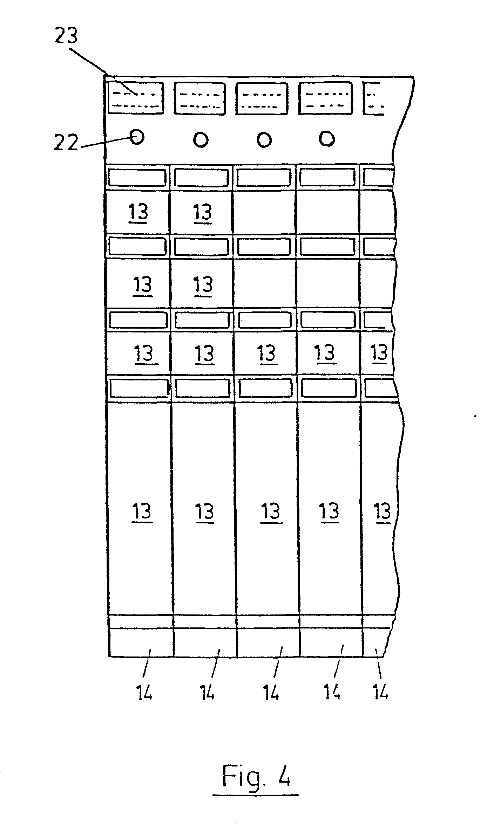

Hierzu sind Vorratsbehälter 13 nebeneinander und übereinander beidseits des Förderbandes 11 angeordnet, und zwar geneigt zur Horizontalen. Die Vorratsbehätler 13 haben an ihrem vorderen, unteren Abgabeende jeweils eine Abgabevorrichtung 14 (vergl. auch die Fig. 2 bis 4), die vom Rechner gesteuert betätigt wird, sobald der in diesem Vorratsbehälter gespeicherte Artikel auf das Förderband abgegeben werden soll.

Den Häufchen 1, 2, 3... sind Kisten 1, 2, 3, 4... zugeordnet, die auf einem zweiten Förderband 15 in Richtung des Pfeiles 16 zu einer Übergabestation 17 transportiert werden. In einem vorbestimmten Abstand vor der Übergabestation steht ein Lesegerät 18, dessen Fühler den Durchgang der Kisten 19 registriert. Der Abstand der Kisten 19 voneinander bzw. die Transportgeschwindigkeiten der Förderbänder und insbesondere des Förderbandes 15, sind nun so abgestimmt, daß einerseits sich beide Förderbänder ständig bewegen und andererseits stets dann eine der Kisten 19 an der Übergabestation 17 sich befindet, wenn dort das zugehörige Häufchen anlangt, das dann praktisch ohne Zeitverzögerung in die betreffende Kiste übergeben wird. Es entfallen somit Warteschleifen, Parkpositionen usw., wie sie bisher benutzt wurden.

Im folgenden werden Einzelheiten der eigentlichen Kommissionieranlage anhand der Fig. 2 bis 4 noch weiter erläutert. Diese Figuren zeigen, daß am Eingabeende jedes Vorratsbehälters ein Lesegerät 20 zum Zubuchen der eingegebenen Artikel vorgesehen ist sowie am Ausgang ein weiteres Lesegerät 21 zum Abbuchen der jeweils abgegebenen Artikel. Die Lesegeräte sind mit dem Rechner und mit einer Anzeige 22 verbunden, beispielsweise einer Warnlampe, die aufleuchtet, sobald in dem betreffenden Vorratsbehälter bzw. in der betreffenden Reihe der Vorratsbehälter der Vorrat an diesen Artikeln nicht mehr ausreicht.

Eine weitere Anzeige 23 bezeichnet die in der betreffenden Reihe befindlichen Artikel, beispielsweise in Gestalt der betreffenden Artikelverpackung.

Fig. 2 läßt auch noch erkennen, daß die Reihen und Spalten der geneigt angeordneten Vorratsbehälter auf einem Plateau 24 montiert sind. Sie reichen so hoch, daß eine Bedienungsperson 25 die Vorratsbehälter von Hand beschicken kann.

Das Förderband 11 läuft auf einem Träger 26.

Zwischen den Reihen der Vorratsbehälter kann noch ein Prallvorhang 27 vorgesehen sein, der die rechts und links auf das Förderband 11 abgegebenen Artikel voneinander trennt.

Die Abgabevorrichtung 14 ist vorzugsweise so ausgebildet, wie Abgabevorrichtungen von Zigarettenautomaten arbeiten.

Die Anzeigetafel 23 enthält zum einen eine Information über den Inhalt jedes Vorratsbehälters 13, beispielsweise in Gestalt einer, ggf. verkleinerten, Wiedergabe der betreffenden Verpackung, und zum anderen eine optische und/oder akustische Anzeige, beispielsweise in Gestalt eines Lämpchens, die anzeigt, ob in dem betreffenden Vorratsbehälter noch ein ausreichender Vorrat an Waren vorhanden ist, oder ob die Gefahr besteht, daß diese Waren in naher Zukunft alle abgegeben sind, so daß die Waren nachgefüllt werden müssen. Das betreffende Lämpchen leuchtet beispielsweise dauernd, wenn ein ausreichender Warenvorrat vorhanden ist, bzw. blinkt, wenn die Waren nachgefüllt werden müssen. Diese Anzeige erfüllt also die Funktion der - jetzt nicht mehr möglichen - optischen Füllstandskontrolle durch Besichtigen des betreffenden Vorratsbehälters.

## Patentansprüche

1. Rechnergesteuerte Kommissionieranlage mit einem mit gleichmäßiger Geschwindigkeit angetriebenen Förderband (11), an dessen Seiten nebeneinander Reihen von schachtartigen, länglichen Vorratsbehältern (13) für zu kommissionierende Artikel (12) angeordnet sind, an deren unteren Enden jeweils eine vom Rechner gesteuerte Abgabevorrichtung (14) vorgesehen ist, die die in ihrem Vorratsbehälter (13) gespeicherten Artikel (12) auf das Förderband (11) abgeben kann, das die in den Vorratsbehältern (13) gespeicherten Artikel (12) nach Aufträgen sortiert weiter transportiert, dadurch gekennzeichnet, daß die Vorratsbehälter (13) gegenüber der Horizontalen geneigt und zu mehreren übereinander angeordnet sind, daß am Abgabeende des Förderbandes (11) eine Übergabestation (17) für die auf dem Förderband (11) kommissionierten Artikel (12) vorgesehen ist, an der ein weiteres, angetriebenes Förderband (15) vorbeigeführt ist und daß an dem weiteren Förderband (15) vor der Übergabestation (17) in einem bestimmten Abstand von dieser ein Lesegerät (18) vorgesehen ist, das ein Signal an den Rechner abgibt, sobald an ihm ein kistenförmiger Behälter (19) für jeweils eine der Kommissionen (1, 2, 3, ...) vorbeitransportiert wird.

2. Rechnergesteuerte Kommissionieranlage nach Anspruch 1, dadurch gekennzeichnet, daß zwischen den Reihen der Vorratsbehälter (13) und etwa mittig über dem Förderband (11) ein Prallvorhang (27) vorgesehen ist.

3. Rechnergesteuerte Kommissionieranlage nach Anspruch 1 oder 2, dadurch gekennzeichnet, daß an jeder Reihe der Vorratsbehälter (13) eine mit dem Rechner sowie mit einer der betreffenden Reihe räumlich zugeordneten Anzeige (22) verbundene Zählvorrichtung (20, 21) für die Anzahl der in der Reihe befindlichen Artikel (12) vorgesehen ist.

4. Rechnergesteuerte Kommissionieranlage nach Anspruch 3, dadurch gekennzeichnet, daß am Eingang und am Ausgang jedes Vorratsbehälters (13) eine Zähleinrichtung (20, 21) für die in den Vorratsbehälter (13) eingegebenen Artikel (12) bzw. für die vom Vorratsbehälter (13) abgegebenen Artikel (12) vorgesehen ist.

5. Rechnergesteuerte Kommissionieranlage nach einem der Ansprüche 1 bis 4, dadurch gekennzeichnet, daß die Neigung der Vorratsbehälter (13) gegenüber der Horizontalen zwischen 30° und 60° beträgt.

6. Rechnergesteuerte Kommissionieranlage nach einem der Ansprüche 1 bis 5, dadurch gekennzeichnet, daß der Abstand zwischen der Übergabestation (17) und dem Lesegerät (18) so bestimmt ist, daß die Behälter (19) im wesentlichen dieselbe Zeit für ihren Transport vom Lesegerät (18) zu der Übergabestation (17) benötigen, wie das erste Förderband (11) vom Anfang der Reihen der Vorratsbehälter (13) zur Übergabestation (17) benötigt.

7. Rechnergesteuerte Kommissionieranlage nach Anspruch 3 oder 4, dadurch gekennzeichnet, daß die Anzeige (22, 23) für jeden der Vorratsbehälter (13) dessen Inhalt nach Art und Menge anzeigt.

8. Rechnergesteuerte Kommissionieranlage nach einem der Ansprüche 1 bis 7, dadurch gekennzeichnet, daß in Transportrichtung des zweiten Förderbandes (15) vor und hinter der Übergabestation (17) eine mit dem Rechner verbundene Waage vorgesehen ist, die durch einen Vergleich des Sollgewichts mit dem Istgewicht die in der Übergabestation (17) an die Behälter (19) übergebenen Artikel (12) jeder Kommission kontrolliert.

## Claims

1. Computer-controlled dispensing plant with a conveyor belt driven at constant speed (11) including lines and columns of longish shaft-shaped compartments (13) for items to be commissioned (12) on either side of the conveyor belt (11), equipped with computer controlled ejectors at their bottom ends (14) which can dispense the goods (12) stored in the compartments (13) onto the conveyor belt (11) which forwards these items (12) in accordance with purchase orders,

wherein the compartments (13) are inclined horizontally towards the middle of the conveyor belt and arranged in lines and columns,

- there is a conveyor station (17) at the end of the conveyor belt (11) for the items (12) commissioned which is passed by another driven belt (15) and

- at the second belt (15) there is a scanner and/or computer (18) at a certain distance before the conveyor station (17), which sends an impulse to the computer whenever a container for one of the respective commissions is transported along it.

2. Computer-controlled dispensing plant described in claim 1, wherein an inpact-absorbing curtain (27) is installed between the rows of compartments (13) above the middle of the conveyor belt (11).

3. Computer-controlled dispensing plant described in claim 1 or 2,

wherein each row of compartments (13) is provided with a counting device (20, 21) which is connected to the computer and to a signal (22) associated with the respective row showing the supply of goods (12) in the compartments.

4. Computer-controlled dispensing plant described in claim 3,

wherein the input-side and the output-side of each compartment are provided with a counting device for the items fed into, respectively taken from the compartments.

5. Computer-controlled dispensing plant described in one of the claims 1 to 4,

wherein the incline of the compartments lies between 30 and 60 degrees.

6. Computer-controlled dispensing plant described in one of the claims 1 to 5,

wherein the distance between the conveyor station (17) and the scanner (18) is defined that the containers basically take the same time for their transport from the scanner (18) to the conveyor station (17) as takes the first order on the conveyor belt (11) from the beginning of the rows of compartments (13) to the conveyor station (17).

7. Computer-controlled dispensing plant described in claims 3 or 4,

wherein the signal lamp (22, 23) indicates the contents of each compartment specifying quality and quantity.

8. Computer-controlled dispensing plant described in one of the claims 1 to 7,

wherein in the forwarding direction of the second conveyor belt (15) before and behind the conveyor station (17) there are balances associated with the computer which control the commissions (12) in the boxes (19) at the conveyor station (17) by comparing the actual to the nominal weight.

## Revendications

1. Magasin de commission contrôlé par ordinateur avec un convoyeur à bande (11) propulsé à vitesse constante avec de colonnes de cages allongées (13), destinées à la réception de marchandises à commissioner (12), arrangées à droite et à gauche de cet convoyeur (11). Les bases de ces cages sont équipées d'un système de jetées (14) commandé par ordinateur. Les marchandises (12) stockées dans les cages (13) peuvent être placées sur le convoyeur (11) qui les transporte selon la commande. Le magasin de commission

est caractérisé

par le fait que les cages (13) sont inclinées vers l'intérieur, et arrangées en colonnes verticales et horizontales. Au bout du convoyeur à bande (11) se trouve une station de transfert (17) pour les marchandises à commissionner (12) sur le convoyeur à bande (11) et un autre convoyeur à bande (15) propulsé, qui est equippé d'un ordinateur à registration (18) à une distance déterminée devant la station de transfert (17) qui envoie un impulse à l'ordinateur chaque fois qu'un conteneur (19) pour une des commissions (1, 2, 3, ...) passe.

2. Magasin de commission contrôlé par ordinateur selon demande 1,

caractérisé

par le fait qu'il y a un rideau amortisseur (27) entre les colonnes de cages (13) au-dessus du convoyeur (11).

3. Magasin de commission contrôlé par ordinateur selon demande 1 ou 2,

caractérisé

par le fait que chaque colonne de cages (13) est equippée d'un appareil à compter (20, 21) les marchandises (12) mis en communication avec l'ordinateur et une lampe indicatrice (22) associée à la colonne respective.

4. Magasin de commission contrôlé par ordinateur selon demande 3

caractérisé

par le fait que l'entrée et la sortie de chaque cage (13) sont equippées d'un appareil à compter (20, 21) pour les marchandises (12) alimentées aux cages et en prélevées.

5. Magasin de commission contrôlé par ordinateur selon demande 1 jusqu'à 4

caractérisé

par le fait que l'inclination horizontale des cages (13) est entre 30 et 60 degrés.

6. Magasin de commission contrôlé par ordinateur selon demande 1 jusqu'à 5

caractérisé

par le fait que la distance entre la station de transfert (17) et l'ordinateur de registration (18) est determinée de façon que les conteneurs (19) aient besoin du même temps pour le transport de l'ordinateur de registration (18) à la station de transfert (17) comme le premier convoyeur à bande (11) du début des colonnes des cages (13) à la station de transfert (17).

7. Magasin de commission contrôlé par ordinateur selon demande 3 ou 4

<u>caractérisé</u>

par le fait que la lampe (22, 23) indique la quantité et la sorte des marchandises de cette cage (13).

8. Magasin de commission contrôlé par ordinateur selon demande 1 jusqu'à 7

<u>caractérisé</u>

par le fait que le deuxième convoyeur (15) à bande est equippé d'une balance associée de l'ordinateur devant et derrière la station de transfert (17), qui contrôle les marchandises (12) dans les conteneurs (19) en comparant le poids actuel avec le poids nominal.

Fig.1

Fig. 2

EP 0 183 074 B1

Fig. 3

Fig. 4